(19) Europäisches Patentamt
European Patent Office
Office européen des brevets

(11) **EP 1 286 551 A1**

(12) **EUROPEAN PATENT APPLICATION**

(43) Date of publication:
**26.02.2003 Bulletin 2003/09**

(51) Int Cl.[7]: **H04N 7/68**

(21) Application number: **01116704.6**

(22) Date of filing: **17.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Telefonaktiebolaget L M Ericsson (Publ)**
**126 25 Stockholm (SE)**

(72) Inventors:
- **Hartung, Frank**
**52134 Herzogenrath (DE)**
- **Schuba, Marko**
**52134 Herzogenrath (DE)**

(74) Representative: **Tonscheidt, Andreas**
**Ericsson Eurolab Deutschland GmbH**
**Patent Department**
**Ericsson Allee 1**
**52134 Herzogenrath (DE)**

(54) **Error concealment for image information**

(57) Method and apparatus for error concealment in an image allowing to conceal an error area in the image with estimated pixels. A first boundary section and a second boundary section adjacent to the error area is determined and correspondences between the boundary elements of the boundary sections are established using non-linear alignment operations. After establishing the correspondences pixels between respective boundary elements of the first boundary section and the second boundary section are estimated. The non-linear alignment operations may include dynamic programming techniques, including Needleman-Wunsch techniques, wherein a similarity measure is used for a matrix fill operation.

100
101
DETECTING MEANS
102
DETERMINING MEANS
103
ALIGNING MEANS
104
ESTIMATING MEANS
110
111
112
113
151 152 153 154 155 156 157
150
1 2 1 2 5 9 3
171 172 173 174 175 176
113
160
1 2 2 2 4 5 9
161 162 163 164 165 166 167

Fig. 1

EP 1 286 551 A1

## Description

### Field of the Invention

The present invention relates to a method and apparatus for error concealment in an image, video or image transmission.

### Technological Background

With increased processing capabilities of data processing devices, a growing number of applications makes use of sophisticated graphics and/or video information in providing services for a user. For example, an application may require the display of a single image or a sequence of images on a display. In this case the image information may be retrieved from a local or remote source or storage unit, subjected to further processing, if necessary, and then displayed on a display accessed by a data processing device.

Digital representations of images generally consist of a large number of pixels representing the image information, for example grayscale information, color information and similar. When displaying the image pixels on a display, they generate a representation of the original image.

As images and particularly sequences of images of a video stream may include large amounts of data, it may be desired to compress the image information in order to reduce the amount of data representing the image. For example, an image can be compressed according to some compression algorithm and then stored on a storage device, requiring less storage space as compared to storing the image in an uncompressed format. If the image is then to be displayed, a corresponding decompression algorithm can be used to decompress the compressed image information prior to displaying it on the display. Compressing the image information can significantly reduce the required amount of information for representing an image or a sequence of images, and thus allows to save storage space.

Further, if a source of an image or image sequence is located remote from a data processing device used for displaying the image or sequence of images, compressing the image information can lead to the further advantage of reducing a data rate requirement for transmitting the image information from a storage location or any other source of image information, such as a camera or similar, to the device for actual display. Thus, not only storage space requirements can be reduced, but also bandwidth requirements for transmitting image or video information.

Several international standards for image/video compression and/or for transmission of compressed video information over packet networks like the Internet or mobile networks exist. An example thereof is the MPEG-4 (Moving Pictures Experts Group) video compression, combined with RTP(Realtime Transport Protocol)/UDP(User Datagram Protocol) packetization and transmission.

Compressed image or video information can be transmitted between data processing devices over any kinds of networks or communication links between data processing devices, including packet switched networks. Packet switched networks are widely used and include wide area networks such as the Internet or local area networks such as company-wide intranets or mobile packet switched networks and similar. Information to be transmitted in packet switched transmission networks is generally divided into information packets which are individually transmitted over the network to a recipient.

At the recipient the information included in a plurality of packets is combined and further processed.

However, when transmitting packets over packet switched networks, particularly when using unreliable protocols, typically some packet loss occurs, i.e. some packets can be lost or delayed beyond a threshold allowing processing during transmission. Thus, parts of the information scheduled for transmission does not arrive at the recipient, leading to incomplete data for further processing. Typically, information loss when transmitting and/or retrieving images or video sequences of images affects part of a single or a plurality of images. For example, an information loss may affect a region within an image to be displayed, which therefore will be perceived as incomplete or distorted by a viewer unless error concealment is applied.

Further, information loss or corruption can occur when retrieving and/or transmitting image data in compressed or uncompressed form due to various other reasons. For example in packets with bit errors delivered for an application or in a bit stream (circuit switched) with bit errors part of the image information is still present in an area.

It is therefore desired to conceal the missing or corrupted region of an image such that a viewer does not readily notice the missing part of the image.

Several techniques for concealment in video and image transmission exist. Some of these methods perform an error concealment based on available information of the image, and thus estimate and conceal the lost pixels only from the remaining pixels of a picture. Such methods are called intraframe concealment methods. Others try to estimate and conceal the lost pixels from pixels of previous and/or from the remaining pixels in the picture and possibly also following frames of a video sequence. Such methods are called interframe concealment methods, as for example outlined in "Error control and concealment for video communication: A review", Yao Wang and Qin-Fan Zhu, Proceedings of the IEEE, Vol. 86, No. 5, May 1998.

Intra-frame concealment methods may simply apply by linear interpolation between corresponding pixels on two sides of a missing region, more advanced methods use block-based interpolation by looking for dominant edges and attempting to continue the edges. Other methods try to interpolate the block-based coefficient domain.

However, all of the above methods fail to provide good error concealment in all possible situations, including characteristics of the images to be handled.

Summary of the Invention

It is therefore an object of the invention to provide for an improved method for error concealment allowing a more flexible and efficient error concealment in an image.

This object of the invention is solved by a method for error concealment in an image, including: detecting an error area in image data of an image consisting of pixels; determining a first boundary section and a second boundary section of the error area, the boundary sections including boundary elements being defined based on pixels with image information close or adjacent to the error area; aligning the boundary elements of the first boundary section and the second boundary section using alignment operations to establish correspondences between respective boundary elements of the first boundary section and the second boundary section; and estimating pixels of the error area based on the established correspondences between respective boundary elements of the first boundary section and the second boundary section.

Accordingly, the invention allows, by aligning the boundary elements using alignment operations, to provide improved correspondences between the boundary elements and thus allows to estimate error concealment information between the established correspondences more closely resembling missing or corrupted image information. Accordingly, the concealment of errors in the image can be improved, both in terms of similarity to the lost information and in terms of visibility for an observer.

The alignment operations may include non-linear alignment operations including dynamic programming techniques. The alignment operations may include Needleman-Wunsch techniques. The alignment operations may allow to establish correspondences between respective boundary elements of the boundary sections at reduced computational complexity.

Preferably, a similarity measure may be used in the alignment operation. For example, a boundary element similarity measure may be used for a matrix fill operation. By providing a similarity measure, computational requirements can be further reduced, as boundary elements having certain similar values can be grouped together, for example into ranges of values not showing a significant perceptual difference for a viewer. Further, sensitivity to minor variations can be reduced, e.g., noise, artifacts, illumination, variations in the object itself, etc..

The similarity measure may include classifying the boundary elements into a plurality of ranges of pixel parameters, a pixel parameter being constituted by at least one of gray level values and color values. By providing a plurality of ranges for the pixel parameters, a classification of the boundary elements using the similarity measure can be effected at reduced computational requirements.

Advantageously, the width of the individual ranges may correspond to a distribution of the parameter values. This allows to adapt the similarity measure, i.e., the ranges, to particular image characteristics, for example if certain parameter values of the boundary pixels are encountered less frequently, e.g. if the boundary sections are generally dark or bright, the adapted width of the ranges allows an improved establishment of correspondences between boundary pixels.

The first and second boundary section may each include an array of pixels lying adjacent to the error area located at opposing sides of the error area. The arrays of pixels may be either continuous or discontinuous.

Each of the boundary elements may be based on at least one image pixel.

The first and second boundary sections may include different numbers of boundary elements, allowing a more flexible definition of boundary sections, for example depending on the size of the error area.

The establishing of correspondences between boundary elements may include establishing a correspondence from a boundary element of the first boundary to no boundary element or at least one boundary element of the second boundary section. Thus, a particular boundary element may be defined to correspond to one or a plurality of boundary elements or may be defined to not correspond to any boundary element of the' second boundary section, allowing further flexibility in establishing the correspondences.

The error area may be constituted by missing parts of rows of the image information and the first and second boundary section may be constituted by row sections of rows of error free pixels of the image. Thus, particularly when applying the invention to compressed image information where often blocks of row sections are missing, e.g. due to packet switched transmission losses, the boundary sections can directly be defined as row sections adjacent to the missing row sections.

The pixels of the error area may be estimated using an interpolation technique.

The image may form an image of a video sequence of images transmitted in uncompressed or compressed form over a packet network.

The image may be a first image of a sequence of images and the estimated pixels may be used for displaying at least one second image of the sequence of images, the second image following or preceding the first image. Accordingly, an inter-image error estimation may be applied using estimated missing pixels of a single image, for example in combination with known techniques for inter-image error concealment.

A program may have instructions adapted to carry out the above operations. Further, a computer-readable medium may have a program embodied therein, wherein the program is to make a computer execute the above method operations. A computer program product may comprise the computer-readable medium.

Further, according to another example, an apparatus for error concealment in an image includes: a detecting unit for detecting an error area in image data of an image consisting of pixels; a determining unit for determining a first boundary section and a second boundary section of the error area, the boundary sections including boundary elements being defined based on pixels with image information close or adjacent to the error area; an aligning unit for aligning the boundary elements of the first boundary section and the second boundary section using non-linear alignment operation to establish correspondences between the respective boundary elements of the first boundary section and the second boundary section; and an estimating unit for estimating pixels of the error area based on the established correspondences between respective boundary elements of the first boundary section and the second boundary section.

Further advantageous features of the invention are described in further dependent claims.

Brief Description of the Drawings

Fig. 1 illustrates elements of an apparatus for error concealment in an image according to an embodiment of the invention.

Fig. 2 illustrates operations of a method according to another embodiment of the invention for error concealment in an image;

Fig. 3 shows examples of boundary sections according to another embodiment of the invention;

Fig. 4 shows operations of a method for error concealment in an image according to another embodiment of the invention, particularly outlining steps for defining ranges of parameters for boundary sections;

Fig. 5 shows an example of alignments between pixels of boundary sections according to another embodiment of the invention; and

Fig. 6 illustrates operations for error concealment in an image according to another embodiment of the invention.

Detailed Description of the Preferred Embodiments

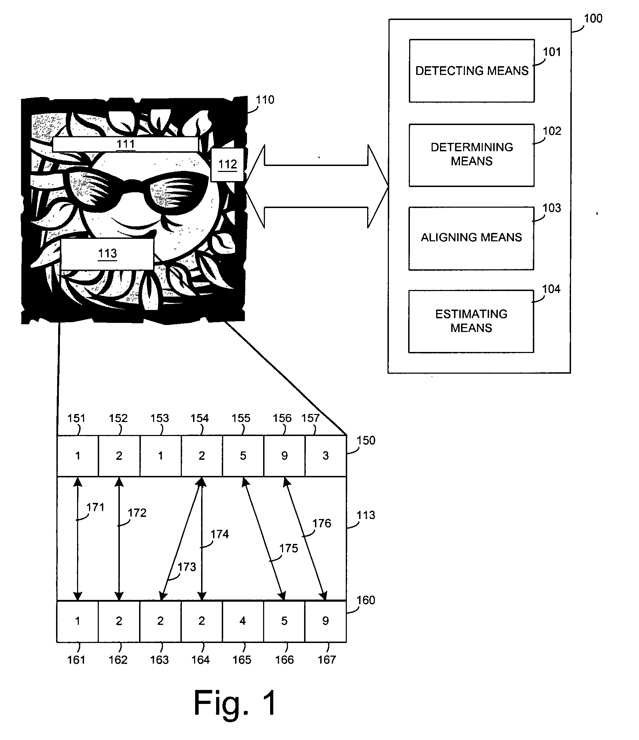

In the following a first embodiment of the invention will be described with respect to Fig. 1.

Fig. 1 illustrates elements of a system for error concealment in an image, e.g. in a system for compressed video or image transmission over a communication link.

Fig. 1 illustrates an exemplary image 110 showing three error areas 111, 112 and 113. The error areas may include missing or corrupted pixels. The image may contain grayscale information, color information or any other type of image information. Further, the image may constitute a single image or one image of a sequence of images, e.g., of a video signal. The error areas and the image itself may be of rectangular shape, as shown in Fig. 1, however, this is an example only, both the error areas and the image may have any other shape.

Further, Fig. 1 shows an apparatus 100 for error concealment in the image 110, including a detecting unit 101 for detecting an error area in image data representing an image consisting of a plurality of pixels. Further, the apparatus 100 includes a determining unit 102 for determining a first boundary section and a second boundary section of an error area, the boundary sections including boundary elements being defined based on pixels with image information close or adjacent to the error area. For example, the boundary elements may correspond to boundary pixels with correct or uncorrupted image information close or adjacent to the error area, i.e. in the vicinity or in close distance to the error area. It is, however, also possible that each of the boundary elements is determined based on a plurality of pixels, for example in a averaging or weighted averaging operation.

An aligning unit 103 is provided for aligning the boundary elements of the first boundary section and the second boundary section using alignment operations to establish correspondences between respective boundary elements of the first boundary section and the second boundary section. For example, linear or non-linear alignment operations may be used. Finally, the apparatus 100 includes an estimating unit 104 for estimating pixels of the error area based on the established correspondences between respective boundary elements of the first boundary section and the second boundary section.

After estimating the missing or corrupted pixels of an error area, the error area may be concealed using the estimated pixels in order to provide an improved representation of the image.

The determining unit may be arranged to detect the error areas 111, 112 and 113 directly in the image, i.e. in an array of pixels constituting the image, or may detect the error areas in association with a transmission signal of compressed or uncompressed image information relating to the image 110, for example over a packet switched transmission network or any other communication link.

Further, Fig. 1 shows an enlarged version of the error area 113. The error area 113 lies adjacent to an image area constituting a first boundary section 150 including, in the present example, seven pixels of the image 110 with correct or uncorrupted image information. The seven pixels of the first boundary section are denoted 151 - 157. Each pixel of the first boundary section 150 preferably represents error free image information of the image 110 to be used for estimating the missing or corrupted pixels of the error area 113. Similarly, the error area 113 lies adjacent to an image area constituting a second boundary section 160, including seven boundary pixels 161 - 167, also preferably including error free image information of the image 110 to be used for estimating pixels of the error area.

Here, the boundary elements are constituted by image pixels, however, this is an example only, in further examples a boundary element could be derived from a plurality of pixels of the image, or of a plurality of pixels of a temporal sequence of images.

Each of the boundary pixels 151 - 157 and 161 - 167 of the first and second boundary section is represented by at least one parameter value such as a gray level or color value. As an example, in Fig. 1 each of the boundary pixels is shown to have a parameter value indicated by an integer number, which may, for example, correspond to gray level or color values, as outlined before.

The aligning unit 103 establishes correspondences between the boundary pixels of the first boundary section and the second boundary section using non-linear alignment operations as illustrated by arrows 171 - 176 in Fig. 1. The arrows 171 - 176 show exemplary established correspondences between the boundary pixels of the first and second boundary sections based on the parameter values of the respective pixels indicated by the integer numbers in the boundary pixels shown in Fig. 1. It is noted that linear alignment operations may be used as well, and also a combination of linear and non-linear alignment operations.

As illustrated, correspondences may be established between pixels having the same parameter value. Due to the characteristic of the non-linear aligning operations correspondences may involve one boundary pixel of each of the first and second boundary section as illustrated by arrows 171, 172, 175 and 176. However, it is also possible that a pixel of the first or second boundary section is defined by the non-linear aligning operations as not corresponding to any of the pixels of the respective other boundary sections, as illustrated by pixels 153 and 157 of the first boundary section and pixel 165 of the second boundary section. Further, a pixel of one boundary section may be defined to correspond to a plurality of pixels of the second boundary section as illustrated in Fig. 1 by arrows 173 and 174 defining a correspondence between pixel 154 of the first boundary section and the two pixels 163 and 164 of the second boundary section.

The non-linear alignment operations for establishing the correspondences between the pixels of the first and second boundary sections may include dynamic programming techniques for improved handling using standard or dedicated digital data processing devices.

The system for error concealment shown in Fig. 1 allows to estimate pixels of error areas in an image or in a sequence of images in order to conceal the error area when displaying the image. The concealed error area improves the representation of the image for a viewer. The non-linear alignment operations allow to align structural features of the respective first and second boundary section such that missing features in the error area may be closely approximated.

In the following examples of the individual elements of the system for concealing errors in an image shown in Fig. 1 will be outlined in further detail.

In the present embodiment according to the invention, the detecting unit 101 for detecting error areas, the determining unit 102, the aligning unit 103 and the estimating unit 104 may be realized involving a computing device such as a general purpose data processing device or a dedicated computing device for error concealment. Further, it is also possible that at least one of the detecting unit, the determining unit, aligning unit and estimating unit is constituted by a separate data processing device or hardware device connected to the remaining elements of the apparatus 100 via a communication link. Moreover, the detecting unit 101, the determining unit 102, the aligning unit 103 and the estimating unit 104 may at least partially be constituted by program sections including instructions for carrying out the respective functionality of the elements. The program sections may be executed by a single data processing device, e.g. of a general purpose computer, or by a plurality of data processing devices connected to one another for exchange of information. The elements of the apparatus 100 may partially be realized in hardware and partially realized in software.

The detecting unit 101 may be adapted to retrieve image information from a storage unit or to receive a data stream, e.g., including packets of uncompressed or compressed image information, e.g. over a communication network or any other kind of communication link.

Further, the detecting unit may be adapted to detect missing portions of image information, e.g. missing or corrupted packets containing image information in order to detect error areas. Corrupted packets may for example be identified via a CRC checksum method, as well known in the art, or by any other error detection method. Missing data packets can be identified using sequential numbers for consecutive packets, as also well known in the art. Any other method to identify missing parts of a data stream representing an image may be employed.

Moreover, it is possible that the detecting unit 101 detects error areas in an image by processing or filtering image information, e.g., to detect missing or corrupted pixels in a representation of the image, for example as stored as an array in a memory. The detecting unit may operate on uncompressed image information or may operate on compressed image information, for example being compressed using the MPEG-4 video compression technique or any other compression technique.

After detecting error areas in an image, the detecting unit transmits information on the error areas to the determining unit 102 for determining a first boundary section and a second boundary section of an error area, the boundary sections being defined based on boundary pixels with correct image information adjacent to the error area.

For example, if an error area is constituted by missing parts of rows of an image, the first and second boundary sections may include row sections adjacent to the missing row sections, as for example the first boundary section 150 and the second boundary section 160 shown in Fig. 1.

However, it is also possible that the boundary sections are constituted by column portions, for example to the left or right of the error area 113 shown in Fig. 1 or may include column sections and row sections surrounding an error area or any other collections of pixels, as it will be outlined further below. A boundary section may include a continuous array of pixels or a discontinuous array of pixels, e.g. to reduce computing requirements. The first and second boundary sections may each include an array of pixels adjacent to the error area located at opposing sides of the error area or may include arrays of pixels surrounding the error area.

An error area may generally have any shape and may include missing and/or corrupted pixels which need to be concealed. The determining unit may select uncorrupted image information directly adjacent to the error area or may select boundary sections in some distance to the corrupted image information, in order to avoid to include any corrupted pixels into the boundary sections.

The first and second boundary section may include different numbers of pixels, for example the first boundary section could include a larger number of pixels to be aligned with a smaller number of pixels of the second boundary section. Since non-linear alignment operations are used, correspondences between different numbers of pixels of the boundary sections can be established.

Further, while the boundary elements of the boundary sections may be constituted by image pixels, it is also possible that the boundary sections are constituted by a plurality of pixels and, optionally, further information. The boundary elements can be derived from any kind of image information. For example, boundary elements can be obtained by averaging between two or more adjacent rows of pixel information in spatial direction or time direction.

Further, boundary elements may be obtained by interpolating between pixel values or by using any other type of image information, including information on image content, such as objects, patterns, texture, shapes etc., if available. Thus, boundary sections may be constituted by a number of boundary elements, each boundary elements being derived from image information.

After the boundary sections are determined, information on the boundary sections is transmitted to the aligning unit 103 for aligning the respective pixels of the boundary sections. The aligning unit uses non-linear alignment operations to establish the correspondences between the pixels of the first boundary section and the second boundary section. The alignment operations may include Needleman-Wunsch techniques for establishing the correspondences.

After establishing the correspondences between the pixels of the boundary sections, as shown in the exemplary embodiment of Fig. 1 using arrows 171 - 176, information on the established correspondences is transmitted to the estimating unit 104 arranged to estimate pixels of the error area between corresponding pixels of the first boundary section and the second boundary section. Any method for estimating pixels between two given pixels, i.e., boundary pixels may be used, e.g., parameter values of the boundary pixels may be also assigned to pixels on a connection line between the boundary pixels, or similar. Examples are a weighted interpolation or a next neighbor interpolation, allowing an estimation at reduced computational complexity.

An interpolation technique, such as a next neighbor interpolation, constitutes a simple and computationally inexpensive scheme for estimating pixels of the error area between corresponding pixels of the boundary sections.

As a more elaborate method for estimating pixels of the error area between corresponding pixels of the boundary sections, a weighted interpolation between the boundary pixels can be chosen, leading to improved results. It is noted that any known technique may be used for estimating the pixels of the error area between corresponding pixels of the boundary sections.

The estimating unit may be further adapted to introduce the estimated pixels into the image, such as the estimated pixels of the error area 113 into the image 110 for providing a representation of the image 110 with concealed errors.

As outlined above, the operations for error concealment in an image may be realized at least partially in software, e.g. by programs or program modules.

Further, a computer-readable medium may be provided having a program embodied thereon, where the program is to make a computer or a system of data processing devices execute functions or operations of the features and elements of the above-described embodiment of the invention.

A computer-readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer-readable medium.

The digital data of the image or sequence of images may be temporarily stored in a memory section (not shown) connected to the apparatus 100 or may be stored externally in a database. However, it is also possible, for example in an internet application, that the image data are transmitted over a network to a client computing device for displaying the image or sequence of images after performing the error concealment according to the invention. The image or video information may be received in compressed or uncompressed form.

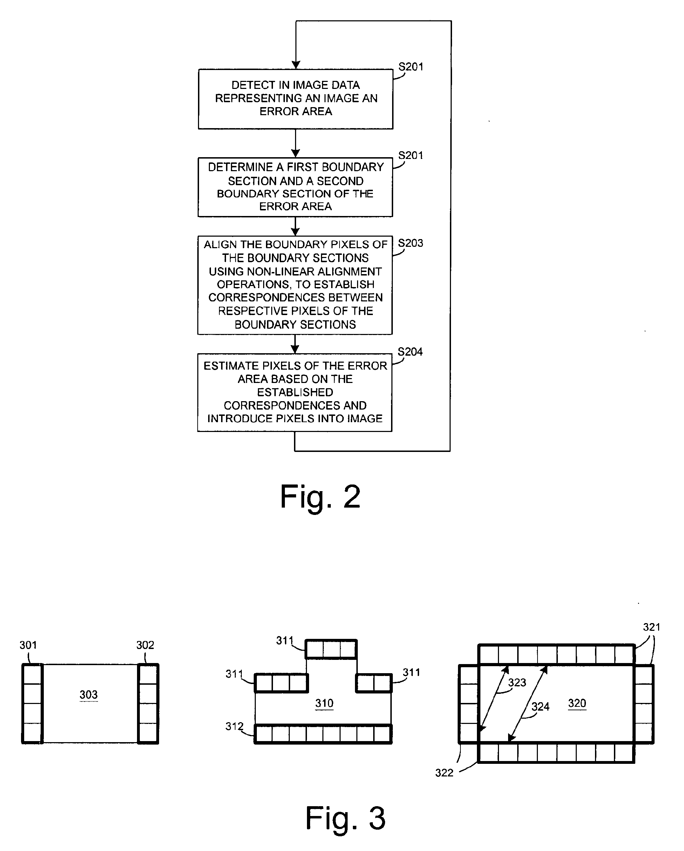

In the following a further embodiment of the invention will be described with respect to Fig. 2.

Fig. 2 shows operations of a method for error concealment in an image according to another embodiment of the invention. The operations shown in Fig. 2 may be carried out using the apparatus shown in Fig. 1, however, Fig. 2 is not limited thereto.

In a first operation S201 an error area is detected in an image, the image being constituted by a plurality of pixels. As outlined before, the image may also be part of a sequence of images, for example of a video sequence. The image may be received in uncompressed or compressed form over a communication link.

Error areas may be detected using a detection unit such as the detection unit 101 outlined in Fig. 1. An error area may include corrupted or missing pixels of the image. As an image may include a plurality of error areas, it is possible that at least two error areas are combined to form a composite error area, e.g., if only few pixels are available in a larger area, the entire area may be handled as an error area.

Any error detection algorithm may be applied to detect corrupted pixels of the image and to detect missing pixels in the image or a data stream constituting the image.

After detecting the error area in the image, in an operation S202 a first boundary section and a second boundary section adjacent to the error area are determined, the boundary sections being defined based on boundary pixels with correct image information.

As outlined before, while the boundary elements may be constituted by image pixels, it is also possible that the boundary sections constitute values being defined based on image pixels. Further, the first and second boundary sections may lie directly adjacent to the error area or in some distance thereto, e.g., in order to avoid including corrupted pixels into the boundary sections. Further, a boundary section may be constituted by a continuous or discontinuous array of pixels, e.g. a row section or any other shape, including curved or angular shapes.

The boundary sections may be defined at opposing edges of the error area, or may be defined to surround the error area, in which case an end portion of a boundary section may abut a starting portion of the second boundary section.

Thereafter, in an operation S203 the boundary pixels of the first and second boundary sections are aligned using non-linear alignment operations, in order to establish correspondences between respective pixels of the boundary sections. Dynamic programming techniques may be used for convenient execution of the error concealment algorithms on a data processing device. As outlined before, the correspondences may include a 1 to 1 correspondence, may define a pixel of a boundary section to not correspond to any pixel of the other boundary section, or may define multiple correspondences between one boundary pixel of the first boundary section and a plurality of boundary pixels of the second boundary section.

Thereafter, in an operation S204 the pixels of the error area are estimated based on the established correspondences, for example using a next neighbor interpolation or a weighted interpolation or any other interpolation technique. The estimated pixels are then used for generating an error concealed representation of the image.

It is also possible, if the image constitutes a first image of a sequence of images, that the estimated pixels are used for displaying at least one second image of the sequence following or preceding the first image. This can be particularly useful in video applications using compression techniques, where errors in one frame may also affect adjacent frames, i.e., errors in one frame may propagate through a plurality of frames.

Further, if the image constitutes an image of a sequence of images, such as of a video sequence, an error area may not only be present in a single image, but may be repetitively present in a sequence of images.

In this case it is also conceivable to define boundary sections not only in the two spatial dimensions such as outlined above in a single image, but also to define boundary sections in three dimensions, i.e. the third dimension considering the temporal sequence of images.

For example, if an error region is present in one image or at a substantially invariant location in a plurality of images of a sequence of images, the first boundary section may be defined in the image preceding the error affected image or images, e.g., the last image in a sequence before the error area appears. Further, the second boundary section could be defined in an image subsequent to the last image involving the error area. Thus, the first boundary section and the second boundary section would be defined in two images of a video sequence framing a subsequence of images affected by errors.

Further, in the above example, it is also possible that a boundary section is defined as a three dimensional array of pixels.

A boundary section may also extend in temporal direction in a plurality of images of the sequence of images.

Still further, it is noted that boundary sections may be derived from a plurality of images of a temporal sequence of images, as in this case noise components can be eliminated. A boundary section can be determined by averaging pixels of a sequence of images, performing a weighting operation, e.g. applying a high weighting factor to pixels of an image featuring the error area, whereas images temporally before or after the image with the error area may be associated with lower weight factors.

Similarly, boundary sections could be defined in a multidimensional alignment using several color channels of a luminance channel and several chrominance or color channels.

Boundary sections could be also defined by combining the above approaches, i.e., in an approach using a time sequence of information from different channels such as color, luminance channels, etc..

In the following an example for aligning the boundary pixels of a first boundary section and a second boundary section using non-linear alignment operations to establish correspondences between respective pixels of the first boundary section and the second boundary section will be outlined with respect to a further embodiment.

In this example, it is assumed that dynamic programming techniques using Needleman-Wunsch techniques are applied.

For the sake of convenience in the present example comparatively short boundary sections are used as examples. Further, in the present case only four different parameter values describing the boundary pixels are assumed to be present. These parameter values are represented by the integer values 1, 2, 3 and 4. For example the parameter values may correspond to gray level information, color information or similar, as outlined before.

It is, however, also possible that the parameter values correspond to a range of gray levels or color values, in order to allow a substantially reduced number of possible parameter values for reduced computational complexity, as outlined further below.

Of course, in practical examples, a larger number of parameter values may be present, and further, a larger number of pixels of the respective boundary sections may be present.

In this example it is assumed that a first boundary section determined for example by the determining unit 102 outlined with respect to Fig. 1 includes eleven pixels with the following individual parameter values:

21144312441 (first boundary section)

Further, it is assumed that the second boundary section includes seven pixels with the following distribution of parameter values:

2214321 (second boundary section)

Accordingly, the length M of the first boundary section is M = 11 and the length N of the second boundary section is N = 7.

For example, in the present embodiment the first and second boundary sections may be constituted by row sections or by any other continuous or discontinuous array of pixels.

For the dynamic programming approach applied in the present embodiment, a simple scoring scheme is assumed wherein

- $S_{ij}$ = 1, if the parameter value at position i of the first boundary section (that is the i-th pixel of the first boundary section) is the same as the parameter value of position j of the second boundary section (i.e., the j-th pixel of the second boundary section). Si,j constitutes a match score. Otherwise

- $S_{i,j}$ = 0, which constitutes a mismatch score.
- w = 0, constitutes a gap penalty applied for generating a gap in the established sequences of correspondences between the pixels of the first boundary section and the second boundary section.

It is noted that it is optional to replace the equality of the matrix fill step by a similarity by setting $S_{ij}$ = 1, equality of the matrix fill step may also be assumed for pixel values not too far apart.

The dynamic programming approach of the present embodiment includes an initialization step, a matrix fill operation, i.e., a scoring operation and a trace back operation, i.e. an alignment operation.

First, the operations of the initialization step will be outlined in detail.

The first step in the global alignment dynamic programming approach is to create a matrix with M plus one columns and N plus one rows, where M and N correspond to the sides of the boundary sections to be aligned, as outlined above.

For simplicity reasons in the present example it is assumed that there is no gap opening or gap extension penalty to be applied and therefore the first row and first column of the matrix can be filled with zero.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | | | | | | | | | | | |
| 2 | 0 | | | | | | | | | | | |
| 1 | 0 | | | | | | | | | | | |
| 4 | 0 | | | | | | | | | | | |
| 3 | 0 | | | | | | | | | | | |
| 2 | 0 | | | | | | | | | | | |
| 1 | 0 | | | | | | | | | | | |

Table 1

In the following step the operations of the matrix fill step are outlined in further detail.

A possible solution for the matrix fill operation finds the maximum global alignment score by starting in the upper left-hand corner in the matrix shown in Table 1 and finding the maximal score $M_{i,j}$ for each position in the matrix. In order to find $M_{i,j}$ for any i,j, it is minimal to know the score for the matrix positions to the left, above and diagonal to i,j. In terms of matrix positions, it is therefore necessary to know $M_{i-1,j}$, $M_{i,j-1}$ and $M_{i-1,j-1}$.

For each position, $M_{i,j}$ is defined to be the maximum score at position i,j; i.e.

$$
\begin{aligned}
M_{i,j} = \mathrm{MAXIMUM}[ \\
&M_{i,j,\ j-1} + S_{i,j} && \text{(match/mismatch in the diagonal)}, \\
&M_{i,j-1} + w && \text{(gap in first boundary section)}, \\
&M_{i-1,j} + w && \text{(gap in second boundary section)}]
\end{aligned}
$$

Using this information, the score at position 1,1 in the matrix can be calculated since the first parameter value in both sequences is a 2, $S_{1,1}$ = 1, and by the assumptions stated at the beginning, w = 0. Thus, $M_{1,1} = MAX[M_{0,0} + 1, M_{1,0}+0, M_{0,1}+0] = MAX[1,0,0] = 1$.

A value of 1 is then placed in position 1,1 of the scoring matrix, as outlined in Table 2.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | | | | | | | | | | |
| 2 | 0 | | | | | | | | | | | |
| 1 | 0 | | | | | | | | | | | |
| 4 | 0 | | | | | | | | | | | |
| 3 | 0 | | | | | | | | | | | |
| 2 | 0 | | | | | | | | | | | |
| 1 | 0 | | | | | | | | | | | |

Table 2

Since in the present example it is assumed that the gap penalty w = 0, the rest of row 1 and column 1 can be filled in with the value 1.

It is, however, noted that the gap penalty w = 0 is an example only, chosen in the present example. Any gap penalty unequal zero can be defined.

For example row 1 is considered, at column 2 the value is the max of 0 (for a mismatch), 0 (for a vertical gap) or 1 (for a horizontal gap). The rest of row 1 can then be filled out similarly until column 8 is reached. At this point there is a parameter value 2 encountered in both sequences. Thus, the value for the cell at row 1, column 8 is the maximum of 1 (for a match), 0 (for a vertical gap) or 1 (for a horizontal gap). The value will again be 1. The rest of row 1 and column 1 is filled with 1 using the above reasoning, as shown in Table 3.

| | | 2 | 1 | 1 | 4 | 4 | 4 | 3 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | 1 | 1 | 1 | 1 | 1 | 1 | 1 | 1 | 1 | 1 |
| 2 | 0 | 1 | | | | | | | | | | |
| 1 | 0 | 1 | | | | | | | | | | |
| 4 | 0 | 1 | | | | | | | | | | |
| 3 | 0 | 1 | | | | | | | | | | |
| 2 | 0 | 1 | | | | | | | | | | |
| 1 | 0 | 1 | | | | | | | | | | |

Table 3

Now attention is drawn to column 2. The location at row 2 will be assigned the value of the maximum of 1 (a mismatch), 1 (a horizontal gap) or 1 (a vertical gap). So the value to be filled in is 1.

At the position of column 2, row 3, there is a parameter value 1 in both sequences. Thus, its value will be the maximum of 2 (match), 1 (horizontal gap), 1 (vertical gap) and thus the value to be entered is 2.

Moving along to position column 2, row 4, the value to be entered at this location will be the maximum of 1 (mismatch), 1 (horizontal gap), 2 (vertical gap) and thus, the value to be entered is 2. Note that for all of the remaining positions except the last one in column 2, the choices for the value will be the exact same as in row 4, since there are no matches. The final row will contain the value 2, since it is the maximum of 2 (match), 1 (horizontal gap) and 2 (vertical gap) .

The filled in column is shown in Table 4.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | 1 | 1 | 1 | 1 | 1 | 1 | 1 | 1 | 1 | 1 |
| 2 | 0 | 1 | 1 | | | | | | | | | |
| 1 | 0 | 1 | 2 | | | | | | | | | |
| 4 | 0 | 1 | 2 | | | | | | | | | |
| 3 | 0 | 1 | 2 | | | | | | | | | |
| 2 | 0 | 1 | 2 | | | | | | | | | |
| 1 | 0 | 1 | 2 | | | | | | | | | |

Table 4

Using the same techniques as described for column 2, the matrix locations in column 3 are filled. The result, using the above technique, is shown in Table 5.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | 1 | 1 | 1 | 1 | 1 | 1 | 1 | 1 | 1 | 1 |
| 2 | 0 | 1 | 1 | 1 | | | | | | | | |
| 1 | 0 | 1 | 2 | 2 | | | | | | | | |
| 4 | 0 | 1 | 2 | 2 | | | | | | | | |
| 3 | 0 | 1 | 2 | 2 | | | | | | | | |
| 2 | 0 | 1 | 2 | 2 | | | | | | | | |
| 1 | 0 | 1 | 2 | 3 | | | | | | | | |

Table 5

After filling in all of the values, the score matrix reads as shown in Table 6.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | 1 | 1 | 1 | 1 | 1 | 1 | 1 | 1 | 1 | 1 |
| 2 | 0 | 1 | 1 | 1 | 1 | 1 | 1 | 1 | 2 | 2 | 2 | 2 |
| 1 | 0 | 1 | 2 | 2 | 2 | 2 | 2 | 2 | 2 | 2 | 2 | 3 |
| 4 | 0 | 1 | 2 | 2 | 3 | 3 | 3 | 3 | 3 | 3 | 3 | 3 |
| 3 | 0 | 1 | 2 | 2 | 3 | 3 | 3 | 4 | 4 | 4 | 4 | 4 |
| 2 | 0 | 1 | 2 | 2 | 3 | 3 | 3 | 4 | 4 | 5 | 5 | 5 |
| 1 | 0 | 1 | 2 | 3 | 3 | 3 | 3 | 4 | 5 | 5 | 5 | 6 |

Table 6

Table 6 shows the result of the matrix fill in step and thus the operations proceed to the traceback step.

In the traceback step, the maximum alignment score for the two exemplary boundary sequences is 6. The traceback step then determines the actual alignments that result in the maximum score. It is noted that with a simple scoring algorithm such as the one that is outlined here, there are likely to be multiple maximal alignments.

The traceback step begins at the M,N position in the matrix, i.e., the position that leads to the maximal score. In this case there is a 6 in that location.

The traceback step takes the current cell and looks to the neighbor cells that could be direct predecessors. This means, the traceback operations require to look to the neighbor to the left (gap in the second boundary section), the diagonal neighbor (match/mismatch) and the neighbor above (gap in the first boundary section). The algorithm for the traceback requires to choose as the next cell in the sequence one of the possible predecessors. In this case, the neighbors are all equal 5 as shown in Table 7.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | 0 |
| 2 | 0 | 1 | 1 | 1 | 1 | 1 | 1 | 1 | 1 | 1 | 1 | 1 |
| 2 | 0 | 1 | 1 | 1 | 1 | 1 | 1 | 1 | 2 | 2 | 2 | 2 |
| 1 | 0 | 1 | 1 | 2 | 2 | 2 | 2 | 2 | 2 | 2 | 2 | 3 |
| 4 | 0 | 1 | 2 | 2 | 3 | 3 | 3 | 3 | 3 | 3 | 3 | 3 |
| 3 | 0 | 1 | 2 | 2 | 3 | 3 | 4 | 4 | 4 | 4 | 4 | 4 |
| 2 | 0 | 1 | 2 | 2 | 3 | 3 | 4 | 4 | 5 | 5 | 5 | 5 |
| 1 | 0 | 1 | 2 | 3 | 3 | 3 | 4 | 5 | 5 | 5 | 5 | **6** |

Table 7

Since the current cell has a value of 6 and the score is a 1 for a match and 0 for anything else, the only possible predecessor is the diagonal match/mismatch neighbor. If more than one possible predecessor exist, any can be chosen. The above operations yield a current alignment of

(first boundary section) 1 (parameter value)
(second boundary section) 1 (parameter value)

After establishing this alignment, attention is drawn to the next current cell and it is determined which cell is to be chosen as its direct predecessor. In this case, as the maximum scores are 4 and 5, the cell to the left of the current cell with the value 5 is to be chosen, as shown in Table 8.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | 0 | ■ |
| 2 | 0 | 1 | 1 | 1 | 1 | 1 | 1 | 1 | 1 | 1 | 1 | ■ |
| 2 | 0 | 1 | 1 | 1 | 1 | 1 | 1 | 1 | 2 | 2 | 2 | ■ |
| 1 | 0 | 1 | 2 | 2 | 2 | 2 | 2 | 2 | 2 | 2 | 2 | ■ |
| 4 | 0 | 1 | 2 | 2 | 3 | 3 | 3 | 3 | 3 | 3 | 3 | ■ |
| 3 | 0 | 1 | 2 | 2 | 3 | 3 | 4 | 4 | 4 | 4 | 4 | ■ |
| 2 | 0 | 1 | 2 | 2 | 3 | 3 | 4 | 4 | 5 | 5 | ← 5 (↖ ↑) | ■ |
| 1 | ■ | ■ | ■ | ■ | ■ | ■ | ■ | ■ | ■ | ■ | ■ | **6** |

Table 8

Thus, the above alignment results a gap to the second boundary section, so the current alignment is

```
(first boundary section)     41 (parameter values)
                              |
(second boundary section)    _1 (parameter values)
```

In the next step, once again the direct predecessor produces a gap in the second boundary section as shown in Table 9.

| | | 2 | 1 | 1 | 4 | 4 | 3 | 1 | 2 | 4 | 4 | 1 |
|---|---|---|---|---|---|---|---|---|---|---|---|---|
| | 0 | 0 | 0 | 0 | 0 | 0 | 0 | 0 | 0 | 0 | | |
| 2 | 0 | 1 | 1 | 1 | 1 | 1 | 1 | 1 | 1 | 1 | | |
| 2 | 0 | 1 | 1 | 1 | 1 | 1 | 1 | 1 | 2 | 2 | | |
| 1 | 0 | 1 | 2 | 2 | 2 | 2 | 2 | 2 | 2 | 2 | | |
| 4 | 0 | 1 | 2 | 2 | 3 | 3 | 3 | 3 | 3 | 3 | | |
| 3 | 0 | 1 | 2 | 2 | 3 | 3 | 4 | 4 | 4 | 4 | | |
| 2 | 0 | 1 | 2 | 2 | 3 | 3 | 4 | 4 | 5 | 5 | **5** | |
| 1 | | | | | | | | | | | | **6** |

Table 9

After this step the current alignment becomes

```
(first boundary section)      4 4 1
                                  |
(second boundary section)     _ _ 1
```

Continuing with the traceback operations as outlined above, the operations eventually reach a position in column 0, row 0, which indicates that the traceback step is completed. One possible maximum alignment can be defined as indicated in Table 10.

| | | 2 | 1 | 1 | 4 | 4 | 3 | 1 | 2 | 4 | 4 | 1 |
|---|---|---|---|---|---|---|---|---|---|---|---|---|
| | 0 | | | | | | | | | | | |
| 2 | | 1 | | | | | | | | | | |
| 2 | | | 1 | | | | | | | | | |
| 1 | | | | 2 | 2 | | | | | | | |
| 4 | | | | | | 3 | | | | | | |
| 3 | | | | | | | 4 | 4 | | | | |
| 2 | | | | | | | | | 5 | 5 | 5 | |
| 1 | | | | | | | | | | | | 6 |

Table 10

which results in the following alignment of the pixels of the first and second boundary sections:

```
2 1 1 4 4 3 1 2 4 4 1
|   |   | |   |     |
2 2 1 _ 4 3 _ 2 _ _ 1
```

Of course, this alignment of the boundary pixels is only one possible solution, an alternate solution may be obtained as shown in Table 11.

| | | 2 | 1 | 1 | 4 | 4 | 3 | 1 | 2 | 4 | 4 | 1 |
|---|---|---|---|---|---|---|---|---|---|---|---|---|
| | 0 | | | | | | | | | | | |
| 2 | | 1 | | | | | | | | | | |
| 2 | | 1 | 1 | | | | | | | | | |
| 1 | | | | 2 | 2 | | | | | | | |
| 4 | | | | | | 3 | | | | | | |
| 3 | | | | | | | 4 | 4 | | | | |
| 2 | | | | | | | | | 5 | 5 | 5 | |
| 1 | | | | | | | | | | | | 6 |

Table 11

resulting in an alignment of the boundary pixels as follows:

```
2 _ 1 1 4 4 3 1 2 4 4 1
|     |   | |   |     |
2 2 _ 1 _ 4 3 _ 2 _ _ 1
```

There are further alternative solutions each resulting in a maximum global alignment score of 6. Since this behaves exponentially, the dynamic programming operations may involve selecting only a single solution.

The above example shows a simple aligning scheme, and it is noted that advanced such aligning schemes may be used to perform the alignment operation of the pixels of the first boundary section and the second boundary section, as known in the art.

Parameters used in the alignment procedure can be determined at the sender and signaled, e.g. for each packet of data the parameters can be signaled in a following packet.

In the following a further embodiment of the invention will be described with respect to Fig. 3.

Fig. 3 shows various examples of error areas identified in an image such as image 110 described with respect to Fig. 1.

As noted before, the boundary sections identified can have any given shape and can be constituted by a continuous or discontinuous array of pixels.

With respect to Fig. 1 examples of error areas having rectangular shape were described, and, boundary section lying adjacent to the upper portion of the error area in image 110 and the lower portion of the error area were defined. As the image is constituted by rows of image information, the first and second boundary sections therefore were constituted by sections of rows containing uncorrupted image information.

However, as shown on the left-hand side of Fig. 3, it is also possible to define column portions as first and second boundary sections 301 and 302, lying adjacent to an error area 303. In this case, the individual pixels of the boundary sections 301 and 302 are established and pixels of the error area can be estimated. Even though in the present case the number of pixels of the first and second boundary sections are the same, as also in the embodiment described with respect to Fig. 1, it is noted that the first and second boundary section may include different number of pixels, e.g., the second boundary section may include a smaller number of pixels than the first boundary section.

Further, in Fig. 3 a second example of an error area is shown in the middle of the figure, denoted 310. This error area is a rectangular error area with a protruding portion in the middle section.

In this example, a first boundary section 311 is considered to be defined by the pixels lying adjacent to the error area 310 in the "upward" direction, forming a discontinuous array of pixels. The second boundary section is constituted by a row portion of boundary pixels 312, similar to previous embodiments.

In this case, correspondences will be established, as before, between the individual pixels of the first boundary section and the second boundary section for estimating pixels of the error area 310 with the protruding portion.

It is noted that apart from the shown examples, the error areas may have further shapes including triangular shapes, circular shapes, and any other shapes.

On the right-hand side of Fig. 3 a third example of an error area and boundary sections is illustrated. In this case, an error area 320 is considered to be constituted by a rectangular region, for example as region 113 shown with respect to Fig. 1.

In the example shown on the right side of Fig. 3, it is assumed that a first boundary section 321 is defined as the pixels surrounding the error area 320 in the "upward" direction and to the "right"-hand side of the error area.

Further, a second boundary section 322 is considered to be constituted by the pixels surrounding the error area 320 in "downward" direction and to the "left-hand side". Thus, in the present example, the first and second boundary sections 321 and 322 fully enclose the error area and lie adjacent to one another at the left lower corner of the error area and the upper right corner of the error area. Accordingly, the first boundary section is constituted by a row portion and by a column portion of pixels and similarly the second boundary section is constituted by a row portion and a column portion of pixels of the image.

As before, correspondences are established between the pixels of the first boundary section and the second boundary section, which may involve establishing correspondences between pixels of the respective row portions of the first and second boundary sections, as indicated by a double-arrow 324, and may include establishing correspondences between pixels of a row section of the first boundary section and a column section of the second boundary section, as illustrated by a double-arrow 323.

In further examples, the first and second boundary sections such as 321 and 322 may include different numbers of pixels, as outlined before.

Further, it is also possible that boundary sections overlap each other.

The examples outlined with respect to Fig. 3 illustrate some possible techniques for determining boundary sections, e.g., allowing to adapt the selection of boundary sections to image characteristics such as texture, known graphic elements and similar.

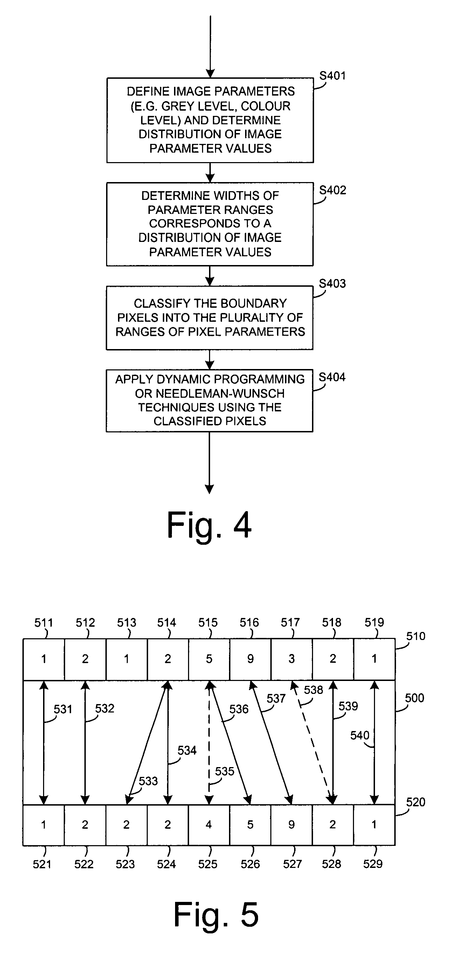

In the following a further embodiment of the invention will be described with respect to Fig. 4.

Fig. 4 outlines operations for defining and grouping image parameters as for example gray level values, color level values and similar in preparation of performing the alignment operations for example as outlined with respect to the previous embodiments. The operations of Fig. 4 may be carried out using the system shown in Fig. 1, however, Fig. 4 is not limited thereto.

In a first operation S401 image parameters such as gray level, color level and similar are defined, preferably in dependence on the encountered pixel values of the image under consideration. Thus, an image parameter may represent one of gray level, color level and similar or a combination of these values.

In today's imaging applications parameter values of pixels of an image may have a wide range, for example, they may be constituted by 8 bit values, 16 bit values, or 32 bit values or even values having higher bit numbers. Performing non-linear alignment operations according to the invention for pixels having a wide range of parameter values can become computationally complex.

Therefore, in the non-linear alignment operation, in order to reduce the computational complexity, the number of different values for the parameter values can advantageously be reduced by introducing a similarity measure for grouping pixels having certain "similar" parameter values. For example, the similarity measure may include classifying the boundary pixels into a plurality of ranges for the pixel parameters, e.g. before a matrix fill operation such as outlined with respect to Fig. 2. And, the width of the individual ranges may correspond to a distribution of the parameter values.

As a practical example, the allowable computational complexity may allow for a number of X different parameter values for the individual pixels of the image, and therefore the available range of the parameter values may be subdivided into X sub-ranges, each of the X ranges including a sub-portion of the image parameter values. Thus, the similarity measure may be used for grouping pixels having similar gray levels or color levels or similar.

With the number of image parameter values the computational complexity can be adjusted and adapted to the available resources.

As outlined above, the similarity measure may include classifying the boundary pixels into a plurality of ranges of pixel gray level values, color values or similar.

Accordingly, the exemplary parameter values 1, 2, 3, 4 used in the example described with respect to Fig. 2 may each constitute a sub-range of gray levels, color values or similar.

Still further, the individual sub-ranges may be adapted to an encountered image specific distribution of the image gray levels, color values or similar, and therefore, in operation S401 it may further be determined a distribution of image parameter values.

The above operation S401 will be further outlined by way of an example.

It is assumed that an image subjected the inventive error concealment is constituted by a gray level representation of an object. The object is considered to have generally dark features, and, an error area is assumed to be present in one of the dark features of the object. Therefore, the boundary pixels surrounding the error area will also have generally dark gray levels and the distribution of image parameter values for the non-linear alignment operation should reflect the generally dark appearance of the boundary pixels.

Thus, in an operation S402 the width of the parameter ranges can advantageously be determined in correspondence to the distribution of encountered pixel values, i.e. the encountered pixel values of the boundary sections.

In an operation S403 the boundary pixels are then classified into the plurality of ranges of pixel parameter values defined in operation S402. Accordingly, a first range may include a large number of parameter values, whereas a second parameter sub-range may include only a small number of possible parameter values.

Thereafter, in an operation S404 the dynamic programming operations, Needleman-Wunsch techniques and similar, constituting the non-linear alignment operations are applied using the defined parameter ranges, as outlined before. In other words, the individual parameter values described with respect to previous embodiments may correspond to a parameter value sub-range.

Defining the individual width of individual ranges in correspondence to a distribution of pixel values such as gray level and color level allows to adapt the classification operation to particular image characteristics.

In the following a further embodiment of the invention will be described with respect to Fig. 5.

Fig. 5 shows a further example of correspondences between pixels of the first and second boundary section.

Fig. 5 shows an error area 500, as for example corresponding to the error area 113 shown with respect to the image 110 illustrated in Fig. 1. It is assumed that a first boundary section 510 including boundary pixels 511, 512 - 519 are defined. Further, it is assumed that a second boundary section 520 including boundary pixels 521 - 529 is defined.

In the present example it is assumed that correspondences are established between the individual pixels of the first and second boundary sections as illustrated by arrows 531, 532 - 540.

While in the example outlined with respect to Fig. 1 correspondences were only established between pixels having identical parameter values, as shown by arrows 531, 532, 533, 534, 536, 537, 539 and 540. However, in the present example, the non-linear alignment operation is modified such that correspondences can also be established between pixels having parameter values similar to one another, similar to what was outlined with respect to Fig. 4. Alignments between pixels having different parameter values are illustrated by arrows 535 and 538.

Allowing an alignment of pixels having different parameter values can be regarded as an alternative to the embodiment outlined with respect to Fig. 4, where the parameter values were grouped into sub-ranges.

In the present example the parameter values can correspond to the "full resolution" image information, and the above similarity measure may be applied in the non-linear alignment operation, allowing alignments between pixels having "similar" parameter values. As before, the similarity measure may include classifying the boundary pixels into a plurality of ranges of pixel parameter values, and, the width of the individual ranges with allowed correspondences may be established in connection with a distribution of the parameter values.

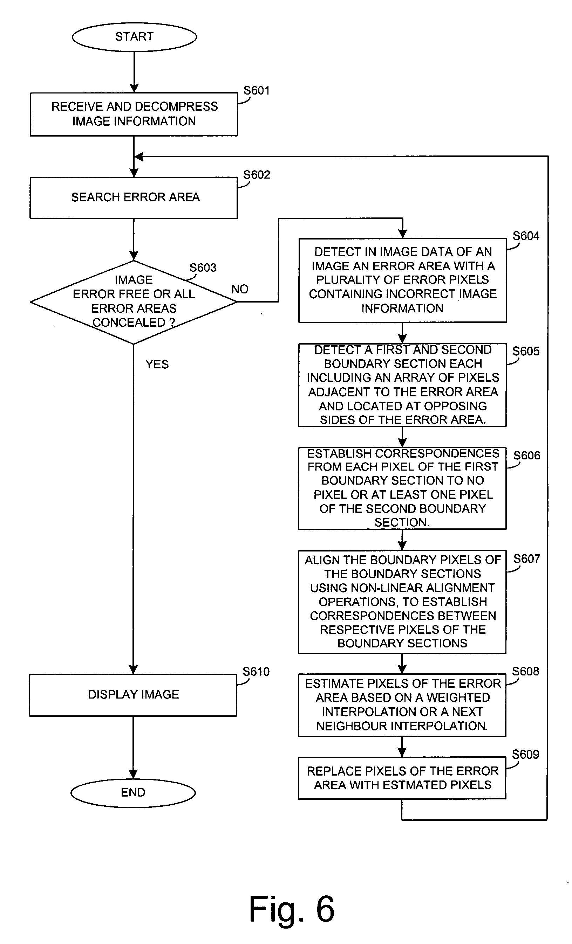

In the following a further embodiment of the invention will be described with respect to Fig. 6.

Fig. 6 illustrates operations of a method for error concealment in an image. The operations shown in Fig. 6 may be carried out using the apparatus shown in Fig. 1, however, Fig. 6 is not limited thereto.

The embodiment shown in Fig. 6 may be applied to an application which receives decompressed image information, for example over a network such as the Internet. For example, a single image or a video sequence of images in a compressed format such as the MPEG-4 format or any other compressing format can be considered.

In a first operation S601 the image information is received and appropriately decompressed, using a decompression algorithm, as known in the art.

In an operation S602 error areas are identified in the image, if present, as for example outlined with respect to previous embodiments. The error area detection may make use of existing algorithms such as CRC check codes or operations for identifying packet loss in packet switched transmission networks, such as the TCP/IP protocol.

In an operation S603 it is determined whether there are any error areas not yet concealed. If in operation S603 the decision is NO, i.e., unconcealed error areas are still present, in an operation S604 in the image data the error areas are detected. The error areas may include a plurality of error pixels containing incorrect image information or may be constituted by missing pixels of the image, for example if entire packets with image information were lost during transmission.

In an operation S605 a first and second boundary section adjacent to the error area is detected, each including an array of pixels adjacent to the error area and located at opposing sides of the error area, as for example outlined with respect to previous embodiments.

In an operation S606 correspondences from each pixel of the first boundary section to no pixel or at least one pixel of the second boundary section are established as particularly outlined with respect to Figs. 1, 3 and 5.

Thereafter, in an operation S607 the boundary pixels of the boundary sections are aligned using non-linear alignment operations, to establish correspondences between the respective pixels of the boundary sections, as also outlined with respect to previous embodiments.

In an operation S608 the pixels of the error area are estimated based on a weighted interpolation, a next neighbor interpolation or any other interpolation or estimation technique, as outlined before or known in the art.

Thereafter, in an operation S609, the pixels of the error area are filled with the estimated pixels, in preparation of displaying the image. Thereafter the flow returns to step S602, and it is searched for a further error area.

If in operation S603 it is determined that no further error area can be determined, i.e., the image error is now error free, the image can be displayed in a step S601, or transmitted to further elements of the system for further processing.

Thereafter the flow ends.

According to another embodiment an apparatus for error concealment in an image may have the following constitution.

1). Apparatus for error concealment in an image, including:

a code section containing instructions to detect an error area in image data of an image consisting of pixels;

a code section containing instructions to determine a first boundary section and a second boundary section of the error area, the boundary sections including boundary elements being defined based on pixels with image information close to the error area;

a code section containing instructions to align the boundary elements of the first boundary section and the second boundary section using alignment operations to establish correspondences between respective boundary elements of the first boundary section and the second boundary section; and

a code section containing instructions to estimate pixels of the error area based on the established correspondences between respective boundary elements of the first boundary section and the second boundary section.

2). Apparatus of 1), including a code section containing instructions for executing dynamic programming techniques.

3). Apparatus of 1), wherein the alignment operations include Needleman-Wunsch techniques.

4). Apparatus of 1), including a code section containing instructions performing a matrix fill operation using a similarity measure.

5). Apparatus of 1), including a code section containing instructions to classify the boundary elements into a plurality of ranges of pixel parameters, a pixel parameter being constituted by at least one of grey level values and colour values.

6). Apparatus of 5), including a code section containing instructions to define the width of the individual ranges corresponding to a distribution of the parameter values.

7). Apparatus of 1), including a code section containing instructions to define the boundary elements based on at least one image pixel.

8). Apparatus of 1), including a code section containing instructions to establish of correspondences from a boundary elements of the first boundary section to no boundary elements or at least one boundary elements of the second boundary section.

9). Apparatus of 1), including a code section containing instructions to estimate the pixels of the error area using at least one of a weighted interpolation and a next neighbour interpolation.

10). Apparatus of 1), wherein the image is a first image of a sequence of images, and including a code section containing instructions to use the estimated pixels or displaying at least one second image of the sequence, the second image following or preceding the first image.

## Claims

**1.** Method for error concealment in an image, including:

detecting an error area in image data of an image consisting of pixels;

determining a first boundary section and a second boundary section of the error area, the boundary sections including boundary elements being defined based on pixels with image information close to the error area;

aligning the boundary elements of the first boundary section and the second boundary section using alignment operations to establish correspondences between respective boundary elements of the first boundary section and the second boundary section; and

estimating pixels of the error area based on the established correspondences between respective boundary elements of the first boundary section and the second boundary section.

**2.** Method of claim 1, wherein the alignment operations include non-linear alignment operations including dynamic programming techniques.

**3.** Method of claim 1 or 2, wherein the alignment operations include Needleman-Wunsch techniques.

**4.** Method of at least one of claims claim 1 - 3, wherein a boundary element similarity measure is used for a matrix fill operation.

**5.** Method of at least one of claims 1 - 4, wherein the boundary element similarity measure includes classifying the boundary elements into a plurality of ranges of pixel parameters, a pixel parameter being constituted by at least one of grey level values and colour values.

**6.** Method of claim 5, wherein the width of the individual ranges corresponds to a distribution of the parameter values.

**7.** Method of at least one of the claims 1 - 6, wherein the first and second boundary section each include an array of pixels adjacent to the error area and are located at opposing sides of the error area.

**8.** Method of at least one of the claims 1 - 7, wherein the boundary elements are each determined based on at least one image pixel.

**9.** Method of at least one of the claims 1 - 8, wherein the first and second boundary section include different numbers of boundary elements.

**10.** Method of at least one of the claims 1 - 9, wherein the establishing of correspondences includes a correspondence from a boundary element of the first boundary section to no boundary element or at least one boundary element of the second boundary section.

**11.** Method of at least one of the claims 1 - 10, wherein the error area is constituted by missing parts of rows of the image information and the first and second boundary section are constituted by row sections of rows of error free pixels of the image.

**12.** Method of at least one of the claims 1 - 11, wherein the pixels of the error area are estimated using an interpolation technique.

**13.** Method of at least one of the claims 1 - 12, wherein the image forms an image of a video sequence of images transmitted in uncompressed or compressed form over a packet network.

**14.** Method of at least one of the claims 1 - 13, wherein the image is a first image of a sequence of images and the estimated pixels are used for displaying at least one second image of the sequence, the second image following or preceding the first image.

**15.** A program having instructions adapted to carry out the method of one of the claims 1 - 14.

**16.** A computer readable medium, in which a program is embodied, where the program is to make a computer execute the method of one of the claims 1 - 14.

**17.** A computer program product comprising the computer readable medium according to claim 16.

**18.** Apparatus for error concealment in an image, including:

a detecting unit for detecting an error area in image data of an image consisting of pixels;

a determining unit for determining a first boundary section and a second boundary section of the error area, the boundary sections including boundary elements being defined based on pixels with image information close to the error area;

an aligning unit for aligning the boundary elements of the first boundary section and the second boundary section using non-linear alignment operations to establish correspondences between respective boundary elements of the first boundary section and the second boundary section; and

an estimating unit for estimating pixels of the error area based on the established correspondences between respective boundary elements of the first boundary section and the second boundary section.

**19.** Apparatus of claim 18, wherein the alignment operations include non-linear alignment operations including dynamic programming techniques.

**20.** Apparatus of claim 18 or 19, wherein the alignment operations include Needleman-Wunsch techniques.

**21.** Apparatus of at least one of the claims 18 - 20, wherein a boundary element similarity measure is used for a matrix fill operation.

**22.** Apparatus of at least one of claims 18 - 21, wherein the boundary element similarity measure includes classifying the boundary elements into a plurality of ranges of pixel parameters, a pixel parameter being constituted by at least one of grey level values and colour values.

**23.** Apparatus of claim 22, wherein the width of the individual ranges corresponds to a distribution of the parameter values.

**24.** Apparatus of at least one of the claims 18 - 23, wherein the first and second boundary section each include an array of pixels adjacent to the error area and located at opposing sides of the error area.

**25.** Apparatus of at least one of the claims 18 - 24, wherein the boundary elements are each determined based on at least one image pixel.

**26.** Apparatus of at least one of the claims 18 - 25, wherein the first and second boundary section include different numbers of boundary elements.

**27.** Apparatus of at least one of the claims 18 - 26, wherein the aligning unit establishes of correspondences from a boundary element of the first boundary section to no boundary element or at least one boundary element of the second boundary section.

**28.** Apparatus of at least one of the claims 18 - 27, wherein the error area is constituted by missing parts of rows of the image information and the first and second boundary section are constituted by row sections of rows of error free pixels of the image.

**29.** Apparatus of at least one of the claims 18 - 28, wherein the estimating unit is adapted to estimate the pixels of the error area using an interpolation technique.

**30.** Apparatus of at least one of the claims 18 - 29, wherein the image forms an image of a video sequence of images transmitted in uncompressed or compressed form over a packet network.

**31.** Apparatus of at least one of the claims 18 - 30, wherein the image is a first image of a sequence of images and the estimated pixels are used for displaying at least one second image of the sequence, the second image following or preceding the first image.

100
DETECTING MEANS
101
DETERMINING MEANS
102
ALIGNING MEANS
103
ESTIMATING MEANS
104
110
111
112
113
151
152
153
154
155
156
157
150
1
2
1
2
5
9
3
171
172
173
174
175
176
113
160
1
2
2
2
4
5
9
161
162
163
164
165
166
167

Fig. 1

DETECT IN IMAGE DATA REPRESENTING AN IMAGE AN ERROR AREA
S201
DETERMINE A FIRST BOUNDARY SECTION AND A SECOND BOUNDARY SECTION OF THE ERROR AREA
S201
ALIGN THE BOUNDARY PIXELS OF THE BOUNDARY SECTIONS USING NON-LINEAR ALIGNMENT OPERATIONS, TO ESTABLISH CORRESPONDENCES BETWEEN RESPECTIVE PIXELS OF THE BOUNDARY SECTIONS
S203
ESTIMATE PIXELS OF THE ERROR AREA BASED ON THE ESTABLISHED CORRESPONDENCES AND INTRODUCE PIXELS INTO IMAGE
S204

Fig. 2

301
302
303
311
311
311
310
312
321
323
324
320
322

Fig. 3

DEFINE IMAGE PARAMETERS (E.G. GREY LEVEL, COLOUR LEVEL) AND DETERMINE DISTRIBUTION OF IMAGE PARAMETER VALUES
S401
DETERMINE WIDTHS OF PARAMETER RANGES CORRESPONDS TO A DISTRIBUTION OF IMAGE PARAMETER VALUES
S402
CLASSIFY THE BOUNDARY PIXELS INTO THE PLURALITY OF RANGES OF PIXEL PARAMETERS
S403
APPLY DYNAMIC PROGRAMMING OR NEEDLEMAN-WUNSCH TECHNIQUES USING THE CLASSIFIED PIXELS
S404

Fig. 4

511 512 513 514 515 516 517 518 519
510
1 2 1 2 5 9 3 2 1
500
531 532 533 534 535 536 537 538 539 540
1 2 2 2 4 5 9 2 1
520
521 522 523 524 525 526 527 528 529

Fig. 5

START
S601
RECEIVE AND DECOMPRESS IMAGE INFORMATION
S602
SEARCH ERROR AREA
S603
IMAGE ERROR FREE OR ALL ERROR AREAS CONCEALED ?
NO
YES
S604
DETECT IN IMAGE DATA OF AN IMAGE AN ERROR AREA WITH A PLURALITY OF ERROR PIXELS CONTAINING INCORRECT IMAGE INFORMATION
S605
DETECT A FIRST AND SECOND BOUNDARY SECTION EACH INCLUDING AN ARRAY OF PIXELS ADJACENT TO THE ERROR AREA AND LOCATED AT OPPOSING SIDES OF THE ERROR AREA.
S606
ESTABLISH CORRESPONDENCES FROM EACH PIXEL OF THE FIRST BOUNDARY SECTION TO NO PIXEL OR AT LEAST ONE PIXEL OF THE SECOND BOUNDARY SECTION.
S607
ALIGN THE BOUNDARY PIXELS OF THE BOUNDARY SECTIONS USING NON-LINEAR ALIGNMENT OPERATIONS, TO ESTABLISH CORRESPONDENCES BETWEEN RESPECTIVE PIXELS OF THE BOUNDARY SECTIONS
S608
ESTIMATE PIXELS OF THE ERROR AREA BASED ON A WEIGHTED INTERPOLATION OR A NEXT NEIGHBOUR INTERPOLATION.
S609
REPLACE PIXELS OF THE ERROR AREA WITH ESTMATED PIXELS
S610
DISPLAY IMAGE
END

Fig. 6

European Patent Office

# EUROPEAN SEARCH REPORT

Application Number
EP 01 11 6704

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 973 754 A (PANIS STATHIS) 26 October 1999 (1999-10-26) * abstract * | 1-31 | H04N7/68 |
| A | US 5 936 674 A (KIM JIN-HUN) 10 August 1999 (1999-08-10) * abstract * | 1-31 | |
| A | CHANGMING SUN: "De-interlacing of video images using a shortest path technique" IEEE TRANSACTIONS ON CONSUMER ELECTRONICS, MAY 2001, IEEE, USA, vol. 47, no. 2, pages 225-230, XP002188607 ISSN: 0098-3063 * abstract * * paragraph [0III] * * paragraph [00IV] * * figures 3-5 * | 1-31 | |
| A | IYENGAR A K: "PARALLEL CHARACTERISTICS OF SEQUENCE ALIGNMENT ALGORITHMS" PROCEEDINGS OF THE SUPERCOMPUTING CONFERENCE. RENO, NOV. 13 - 17, 1989, NEW YORK, IEEE, US, vol. CONF. 2, 13 November 1989 (1989-11-13), pages 304-313, XP000090894 ISBN: 0-89791-341-8 * paragraph [03.1] * | 1-31 | TECHNICAL FIELDS SEARCHED (Int.Cl.7) H04N |

The present search report has been drawn up for all claims

| Place of search | Date of completion of the search | Examiner |
|---|---|---|
| THE HAGUE | 29 January 2002 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 11 6704

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2002

| Patent document cited in search report | Publication date | Patent family member(s) | Publication date |
|---|---|---|---|
| US 5973754 A | 26-10-1999 | DE 19548452 C1 | 20-02-1997 |
| | | EP 0780792 A2 | 25-06-1997 |
| | | JP 9191461 A | 22-07-1997 |
| US 5936674 A | 10-08-1999 | KR 196872 B1 | 15-06-1999 |
| | | CN 1159122 A | 10-09-1997 |
| | | GB 2308767 A ,B | 02-07-1997 |
| | | JP 9219863 A | 19-08-1997 |

EPO FORM P0459

For more details about this annex : see Official Journal of the European Patent Office, No. 12/82